# EUROPÄISCHE PATENTSCHRIFT

(11) **EP 0 783 420 B1**
(45) Veröffentlichungstag und Bekanntmachung des Hinweises auf die Patenterteilung: **15.04.1998**
(21) Anmeldenummer: 95931156.4
(22) Anmeldetag: 20.09.1995
(51) Int. Cl.: B60T 8/36

(54) **ELEKTROHYDRAULISCHE DRUCKEINSTELLVORRICHTUNG, INSBESONDERE FÜR EINE SCHLUPFGEREGELTE FAHRZEUGBREMSANLAGE**
ELECTRO-HYDRAULIC PRESSURE SETTING DEVICE, ESPECIALLY FOR A CONTROLLED-SLIP VEHICLE BRAKE SYSTEM
DISPOSITIF ELECTRO-HYDRAULIQUE DE REGLAGE DE LA PRESSION, NOTAMMENT POUR SYSTEMES DE FREINAGE DE VEHICULES A REGULATION ANTIPATINAGE

(30) Priorität: 13.10.1994 DE 4436618
(43) Veröffentlichungstag der Anmeldung: 16.07.1997
(73) Patentinhaber: ROBERT BOSCH GMBH, 70442 Stuttgart (DE)
(72) Erfinder: STAIB, Helmut, D-71701 Schwieberdingen (DE); FRIEDOW, Michael, D-71732 Tamm (DE)
(86) Internationale Anmeldenummer: DE9501291
(87) Internationale Veröffentlichungsnummer: WO9611827

(56) Entgegenhaltungen:
- DE-A- 3 439 378
- DE-A- 4 100 967
- DE-A- 4 306 769
- GB-A- 686 658
- GB-A- 2 074 233

## Beschreibung

### Stand der Technik

Die Erfindung geht aus von einer elektrohydraulischen Druckeinstellvorrichtung nach der Gattung des Patentanspruchs.

Es ist schon eine solche elektrohydraulische Druckeinstellvorrichtung bekannt (DE 41 00 967 A1), bei der in einem haubenförmigen Deckel die Spulen von Magnetventilen elastisch nachgiebig aufgehängt sind, um beim Fügen mit einem Ventilblock relativ zu diesem, d. h. radial und axial ausrichtbar zu sein. Hierzu sind elastische Halterungen in Form von Schraubendruckfedern zwischen dem Deckel und den Spulen vorgesehen, um eine gegen den Ventilblock gerichtete Kraft auf die Spulen zu erzeugen. Nach dem Fügen soll durch eine definierte axiale Anpressung der Spulen gegen den Ventilblock deren Lage gesichert werden. Solange der Fügevorgang jedoch noch nicht stattgefunden hat, sind die Spulen im Deckel an einem Anschlag abgestützt, um die Kraft der Federn aufzunehmen, damit Kontaktelemente, welche die Spulen mit einem oberhalb diesen angeordneten elektronischen Regler im Deckel verbinden, nicht überbeansprucht werden.

Zugleich ist durch die Abstützung sichergestellt, daß die Federn bis zum Fügen des Deckels mit den Spulen nicht verlorengehen.

### Vorteile der Erfindung

Die erfindungsgemäße Druckeinstellvorrichtung mit den kennzeichnenden Merkmalen des Patentanspruchs hat den Vorteil, ein einteiliges Federelement für eine Vielzahl von Spulen aufzuweisen, welches im vormontierten Zustand durch einfachen Kraftschluß seine Lage am Ventilblock selbst sichert, beim Aufstecken der Spulen auf die Ventildome jedoch den Kraftschluß aufgibt und seine die Spulen axial belastende Funktion ausübt. Dabei wird lediglich der Umstand ausgenutzt, daß das Federelement durch Verformung seines Steges eine gegenüber seiner gestreckten Länge verkürzte Längsausdehnung hat.

Durch die in den Unteransprüchen aufgeführten Maßnahmen sind vorteilhafte Weiterbildungen und Verbesserungen der im Patentanspruch angegebenen Druckeinstellvorrichtung möglich.

Die in den Ansprüchen 2 bis 4 gekennzeichneten Ausgestaltungen der Erfindung geben auf einfache Weise erzeugbare Formgebungen des Federelementes an, um dessen Länge im unmontierten Zustand zu verkürzen.

Mit der im Anspruch 5 angegebenen Maßnahme ist ein werkstoffsparendes, für alle Ventile zweier Reihen nutzbares Federelement geschaffen.

### Zeichnung

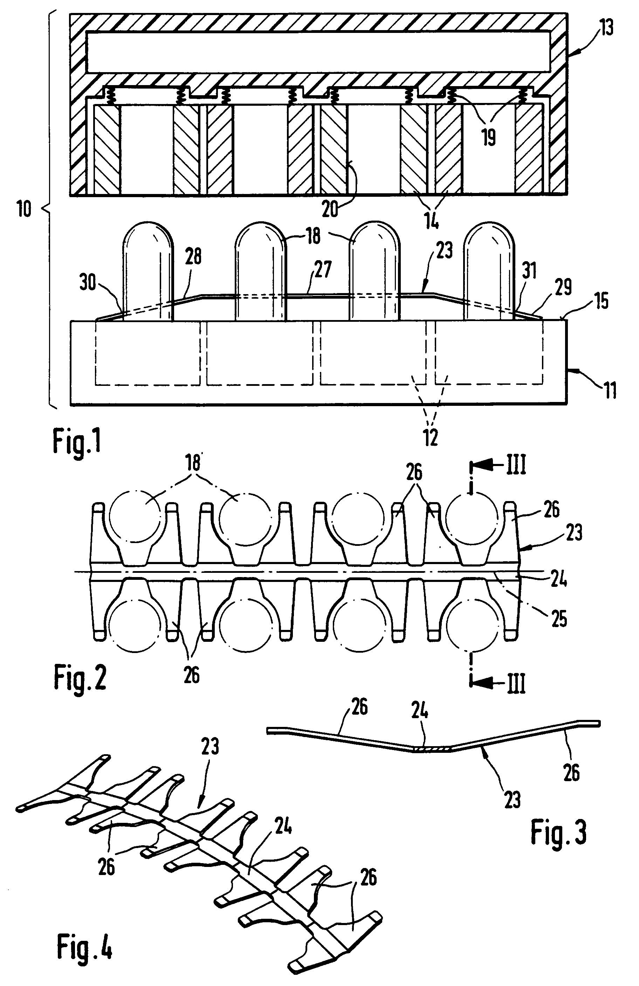

Ausführungsbeispiele der Erfindung sind in der Zeichnung vereinfacht dargestellt und in der nachfolgenden Beschreibung näher erläutert. Es zeigen Figur 1 eine Ansicht einer schematisch wiedergegebenen Druckeinstellvorrichtung während des Fügens von in einem Deckel aufgenommenen Spulen auf einen Ventilblock mit einem auf Ventildome aufgesteckten Federelement in einer ersten Ausführungsform, Figur 2 eine Draufsicht auf das Federelement im gestreckten Zustand, Figur 3 einen Querschnitt des Federelements entlang der Linie III-III in Figur 2 in vergrößertem Maßstab und Figur 4 in raumbildlicher Darstellung eine zweite Ausführungsform des Federelements.

### Beschreibung der Ausführungsbeispiele

Eine in Figur 1 dargestellte elektrohydraulische Druckeinstellvorrichtung 10 für eine schlupfgeregelte Fahrzeugbremsanlage besteht im wesentlichen aus einem Ventilblock 11, in dem Ventile 12 aufgenommen sind, und aus einem haubenförmigen Deckel 13 mit darin angeordneten Spulen 14 für die elektromagnetische Betätigung der Ventile 12. Figur 1 gibt einen Zustand beim Fügen des Deckels 13 auf den Ventilblock 11 wieder. In fertigmontiertem Zustand ist der Deckel 13 entlang einer Stützfläche 15 des Ventilblocks 11 mit diesem vereinigt und durch nicht dargestellte Schrauben verbunden.

Im Ventilblock 11 sind die Ventile 12 deckungsgleich in zwei parallel zueinander verlaufenden, in der Zeichenebene hintereinanderliegenden Reihen angeordnet. Die mit dem Ventilblock 11 vereinigten Ventile haben jeweils einen rechtwinklig von der Stützfläche 15 nach oben aufragenden Ventildom 18. In entsprechender Anzahl und Anordnung sind die Spulen 14 innerhalb des Deckels 13 aufgenommen. Sie sind durch nachgiebige elektrische Kontaktelemente 19 mit einem im Deckel 13 angeordneten, nicht gezeichneten elektronischen Regler verbunden. Aufgrund der Nachgiebigkeit der Kontaktelemente 19 können die Spulen 14 in bezüglich ihrer Längsachse axialer und radialer Richtung Veränderungen ihrer Lage im Deckel 13 unterworfen werden. Lageänderungen der Spulen 14 treten beim Fügen des Deckels 13 auf den Ventilblock 11 auf, wenn die mit ihrer Innenbohrung 20 passend auf den Durchmesser der kreiszylindrisch ausgebildeten Ventildome 18 abgestimmten Spulen 14 beim Aufstecken auf die Ventildome relativ zu diesen ausgerichtet werden. Dabei erlaubt die Nachgiebigkeit der Kontaktelemente 19 den Ausgleich von trotz genauer Fertigung auftretenden Toleranzen bezüglich der Lage und des Achsverlaufs von Spule 14 und Ventildom 18.

Bei in einem Fahrzeug montierter Druckeinstellvorrichtung 10 muß sichergestellt sein, daß die bei der Montage des Deckels 13 auf den Ventilblock 11 erwünschte axiale Nachgiebigkeit der Spulen 14 unter den im Fahrbetrieb herrschenden Bedingungen aufgehoben ist. Zu diesem Zweck ist am Ventilblock 11 ein Federelement 23 angeordnet. Das in Figur 2 in der Draufsicht wiedergegebene Federelement 23 besitzt einen in Längsrichtung durchgehenden Steg 24, von dem, im wesentlichen rechtwinklig zu dessen Achse 25 verlaufend, Paare von Federzungen 26 ausgehen. Bei zwei gemäß Figur 1 parallel verlaufenden Reihen von deckungsgleich hintereinander liegenden Ventilen 12 erstrecken sich die Paare der Federzungen 26 symmetrisch zu beiden Seiten der Achse 25 des Stegs 24. Die beiden Federzungen 26 eines Paares umgreifen jeweils einen Ventildom 18, wie dies in Figur 2 anhand des strichpunktiert angedeuteten Querschnitts der Ventildome 18 dargestellt ist. Das Federelement 23 ist dazu bestimmt, mit den freien Enden der Federzungen 26 an der ventilblockseitigen Stirnseite der jeweils zugeordneten Spule 14 anzugreifen, während der Steg 24 an der Stützfläche 15 des Ventilblocks 11 abgestützt ist. Für diesen Zweck hat das Federelement 23 einen Querschnitt wie er in Figur 3 vergrößert wiedergegeben ist. Bei auf den Ventilblock 11 aufgesetztem Deckel 13 bewirken die Federzungen 26 des Federelements 23 eine axialspielfreie Abstützung der Spulen 14 am Deckel 13.
Die Druckeinstellvorrichtung 10 ist vorteilhafterweise in zwei Baugruppen vorzumontieren, von denen die eine den Deckel 13 mit den darin angeordneten Spulen 14 sowie weiteren nicht dargestellten elektrischen Bauteilen bildet, während die andere den Ventilblock 11 mit den Ventilen 12 umfaßt. Wie Figur 1 zeigt, ist das Federelement 23 der Baugruppe des Ventilblocks 11 zugeordnet und zwischen den beiden Reihen der Ventile 12 aufgenommen. Während Figur 2 die gestreckte Lage des Federelementes 23 wiedergibt, in welcher die Federzungen 26 die Ventildome 18 mit radialem Spiel umgreifen, zeigt Figur 1 eine erste Ausführungsform des Federelements mit einem von der Ebenheit des Steges 24 abweichenden Form. Dieser weist nämlich einen geraden, parallel zur Stützfläche 15 verlaufenden ebenen Mittelabschnitt 27 auf, an den sich beiderseits, gegen die Stützfläche abgeknickt, gerade Endabschnitte 28 und 29 anschließen. Hierdurch wird eine Verkürzung des Federelementes 23 erzielt, so daß im Bereich von dessen beiden Enden gelegene Federzungen 26 an voneinander abgewandten Seiten der äußeren Ventildome 18 der beiden Ventilreihen mit Vorspannung angreifen, und zwar an den in Figur 1 mit 30 und 31 bezeichneten Stellen. Durch eine solche Verkürzung des Federelementes 23 wird auf einfache Weise erreicht, daß dieses nach dem Aufstecken auf die Ventildome 18 kraftschlüssig an diesen angreift und somit für die weitere Handhabung der Baugruppe seine Lage sichert. Beim Fügen des Deckels 13 mit den Spulen 14 auf den Ventilblock 11 wird das Federelement 23 gegen die Stützfläche 15 niedergedrückt und der Kraftschluß durch radiales Abheben der äußeren Federzungen 26 von den entsprechenden Ventildomen 18 beendet.

Die Längenverkürzung des Federelements 23 ist auch durch andere Formgebung erzielbar. Beispielsweise kann dies durch mehr als zweifaches Abknicken des Steges 24 zur gleichen Seite erreicht werden, wie dies in Figur 4 anhand einer zweiten Ausführungsform dargestellt ist. Der Steg 24 des Federelements 23 erhält durch dieses mehrfache Abknicken um einen kleinen Winkel einen bogenförmigen Verlauf. In weiterer Ausgestaltung kann der Steg 24 auch mit in seiner Längsrichtung verlaufender gleichmäßiger Krümmung versehen sein. Auch sind weitere Formgebungen denkbar, um die gewünschte Verkürzung zu erzielen.

## Patentansprüche

1. Elektrohydraulische Druckeinstellvorrichtung (10), insbesondere für eine schlupfgeregelte Fahrzeugbremsanlage, mit in Reihe angeordneten, elektromagnetisch betätigbaren Ventilen (12), die mit einem Ventilblock (11) vereinigt sind und jeweils einen von einer Stützfläche (15) des Ventilblocks aufragenden Ventildom (18) sowie eine zu dem Ventildom ausrichtbare und auf diesen steckbare Spule (14) haben, mit einem die Spulen (14) aufnehmenden und die Ventildome (18) bedeckenden, am Ventilblock (11) befestigbaren Deckel (13) sowie mit einem die aufgesteckten Spulen (14) axial haltenden Federelement (23), gekennzeichnet durch die weiteren Merkmale:
- das Federelement (23) ist ein Federblech mit einem entlang der Ventilreihe verlaufenden Steg (24), von dem im wesentlichen rechtwinklig zum Steg Paare von Federzungen (26) ausgehen, welche jeweils einen Ventildom (18) umgreifend sich zwischen der Stützfläche (15) und der zugeordneten Spule (14) erstrecken,
- der Steg (24) des Federelements (23) weist wenigstens teilweise eine von der Ebenheit abweichende Form mit der Folge einer Verkürzung des Federelements (23) auf, aufgrund der vor dem Aufstecken der Spulen (14) auf die Ventildome (18) im Bereich der beiden Enden des Federelements (23) gelegene Federzungen (26) an voneinander abgewandten Seiten zweier Ventildome (18) angreifen, während bei auf die Ventildome (18) gesteckten Spulen (14) der Steg (24) in Richtung seiner Ebenheit gestreckt ist.

2. Elektrohydraulische Druckeinstellvorrichtung nach Anspruch 1, dadurch gekennzeichnet, daß der Steg (24) des Federelements (23) beiderseits eines ebenen Mittelabschnitts (27) mit zur gleichen Seite abgeknickten Endabschnitten (28, 29) versehen ist.

3. Elektrohydraulische Druckeinstellvorrichtung nach Anspruch 1 oder 2, dadurch gekennzeichnet, daß der Steg (24) über seine Länge mehr als zweifach abgeknickt ist.

4. Elektrohydraulische Druckeinstellvorrichtung nach Anspruch 1, dadurch gekennzeichnet, daß der Steg (24) des Federelements (23) in seiner Längserstreckung bogenförmig gekrümmt ist.

5. Elektrohydraulische Druckeinstellvorrichtung nach Anspruch 1 mit in zwei parallel nebeneinanderliegenden Reihen angeordneten Ventilen (12), dadurch gekennzeichnet, daß die Paare von Federzungen (26) sich beiderseits des Steges (24) des Federelements (23) symmetrisch zu einer im Steg verlaufenden Achse (25) erstrecken.

## Claims

1. Electrohydraulic pressure-setting device (10), particularly for a slip-controlled vehicle brake system, with electromagnetically actuable valves (12) which are arranged in series and which are joined to a valve block (11) and each have a valve dome (18) projecting upwards from a supporting surface (15) of the valve block and a coil (14) which can be aligned relative to the valve dome and placed on the latter, with a cover (13) which accommodates the coils (14) and covers the valve domes (18) and can be fastened to the valve block (11), and with a spring element (23) which holds the placed-on coils (14) axially, characterized by the following features:
- the spring element (23) is a spring sheet with a web (24) which extends along the row of valves and from which pairs of spring tongues (26) emanate essentially at right angles to the web, each surrounding a valve dome (18) and extending between the supporting surface (15) and the associated coil (14),
- the web (24) of the spring element (23) has a shape which deviates at least in part from flatness, resulting in a shortening of the spring element (23) owing to which, before the coils (14) are fitted onto the valve domes (18), spring tongues (26) situated in the region of the two ends of the spring element (23) engage on mutually opposite sides of two valve domes (18), whereas when the coils (14) are fitted onto the valve domes (18) the web (24) is stretched in the direction of its flatness.

2. Electrohydraulic pressure-setting device according to Claim 1, characterized in that the web (24) of the spring element (23) is provided on both sides of a flat central portion (27) with end portions (28, 29) bent towards the same side.

3. Electrohydraulic pressure-setting device according to Claim 1 or 2, characterized in that the web (24) is bent more than twice along its length.

4. Electrohydraulic pressure-setting device according to Claim 1, characterized in that the web (24) of the spring element (23) is curved in an arc shape along its length.

5. Electrohydraulic pressure-setting device according to Claim 1 with valves (12) arranged in two rows situated adjacent to one another and parallel, characterized in that the pairs of spring tongues (26) extend symmetrically with respect to an axis (25) running in the web on both sides of the web (24) of the spring element (23).

## Revendications

1. Dispositif électro-hydraulique de réglage de la pression (10), en particulier pour un système de freinage de véhicules à régulation anti-patinage, comprenant des vannes (12) disposées en série, pouvant être actionnées de façon électromagnétique qui sont réunies en un bloc de vannes (11) et ont respectivement un dôme de vanne (18) qui fait saillie à partir d'une surface d'appui (15) du bloc de vanne et une bobine (14) qui peut être alignée sur le dôme de vanne et enfiler sur celui-ci, un couvercle (13) recevant les bobines (14) et recouvrant les dômes des vannes (18), couvercle qui peut être fixé sur le bloc de vannes (11) et un élément à ressort (23) qui maintient axialement les bobines (14) qui ont été enfilées,
caractérisé par les autres éléments suivants :
- l'élément à ressort (23) est une tôle à ressort avec une barrette (24) qui s'étend le long de la rangée de vannes, à partir de laquelle partent sensiblement à angle droit par rapport à la barrette des paires de languettes élastiques (26) qui s'étendent en entourant respectivement un dôme de vanne (18) entre la surface d'appui (15) et la bobine correspondante (14),
- la barrette (24) de l'élément à ressort (23) présente, au moins en partie, une forme qui s'écarte de celle d'un plan, avec pour conséquence un raccourcissement de l'élément à ressort (23), raccourcissement grâce auquel les languette élastiques (26), mises avant l'enfilage des bobines (14) sur les dômes des vannes (18) dans la zone des deux extrémités de l'élément à ressort (23), viennent en prise sur les côtés opposés de deux dômes de vannes (18), tandis que dans le cas de bobines (14) enfilées sur les dômes des vannes (18) la barrette (24) s'allonge dans son plan.

2. Dispositif électro-hydraulique de réglage de la pression selon la revendication 1,
caractérisé en ce que
la barrette (24) de l'élément à ressort (23) est pourvue des deux côtés d'une section centrale plane (27) de sections terminales (28, 29) pliées du même côté.

3. Dispositif électro-hydraulique de réglage de la pression selon la revendication 1 ou 2,
caractérisé en ce que
la barrette (24) est pliée sur toute sa longueur plus de deux fois.

4. Dispositif électro-hydraulique de réglage de la pression selon la revendication 1,
caractérisé en ce que
la barrette (24) de l'élément à ressort (23) est recourbée en forme d'arc sur son étendue longitudinale.

5. Dispositif électro-hydraulique de réglage de la pression selon la revendication 1, avec des vannes (12) disposées selon deux rangées placées côte à côte en parallèle,
caractérisé en ce que
les paires de languettes élastiques (26) s'étendent des deux côtés de la barrette (24) de l'élément à ressort (23) de façon symétrique par rapport a un axe (25) qui s'étend dans la barrette.
